Europäisches Patentamt

European Patent Office

Office Européen des brevets

(19)

(11) Veröffentlichungsnummer : **0 221 264 B1**

# EUROPÄISCHE PATENTSCHRIFT

(12)

(45) Veröffentlichungstag der Patentschrift :
02.01.91 Patentblatt 91/01

(51) Int. Cl.⁵ : **G01P 3/36, B65H 55/04**

(21) Anmeldenummer : **86111252.2**

(22) Anmeldetag : **14.08.86**

(54) **Einrichtung zur Messung der Drehgeschwindigkeit.**

(30) Priorität : **21.09.85 DE 3533687**

(43) Veröffentlichungstag der Anmeldung :
**13.05.87 Patentblatt 87/20**

(45) Bekanntmachung des Hinweises auf die
Patenterteilung :
**02.01.91 Patentblatt 91/01**

(84) Benannte Vertragsstaaten :
**DE FR GB IT**

(56) Entgegenhaltungen :
**CH-A- 214 701
GB-A- 2 146 428
US-A- 3 636 990
US-A- 4 120 588**

(73) Patentinhaber : **TELDIX GmbH
Grenzhöfer Weg 36 Postfach 105608
D-6900 Heidelberg 1 (DE)**

(72) Erfinder : **Baron, Uwe Klaus, Dr.rer.nat.
Turnerstrasse 11
D-6900 Heidelberg 1 (DE)**
Erfinder : **Kiesel, Eberhard, Dipl.-Phys.
Friedrichsfelder Strasse 19
D-6803 Edingen (DE)**

(74) Vertreter : **Kammer, Arno, Dipl.-Ing.
TELDIX GmbH Postfach 10 56 08 Grenzhöfer
Weg 36
D-6900 Heidelberg 1 (DE)**

## Beschreibung

Die Erfindung geht aus von einer Lichtleitfaserwicklung für eine Einrichtung zur Messung der Drehgeschwindigkeit nach der Gattung des Hauptanspruchs. Eine derartige Einrichtung ist bekannt (DE-OS 33 32 718).

Die genannte Literaturstelle beschreibt einen Aufbau der Lichtleitfaserwicklung, bei der die beiden Enden der Lichtleitfaser entweder in derselben Wicklungslage oder in benachbarten Wicklungslagen angeordnet sind. Außerdem wird gefordert, daß beide Enden zueinander dicht benachbart sind. Damit ist bezüglich der Enden eine Symmetrie hergestellt. Es hat sich jedoch gezeigt, daß sich Störungen sowohl thermischer Art als auch durch Strahlungseinflüsse auf Teilbereiche (äußeren Umfang) und auf die gesamte Wicklung auswirken. Mit anderen Worten können solche Störungen bei der beschriebenen Art der Wicklung ungleiche Auswirkungen auf die Lichtstrahlen zeigen, da in dem beschriebenen Aufbau nur eine Symmetrie bezüglich der Enden besteht. Diese Störungen führen dann zu einer wesentlichen Beeinträchtigung des Meßergebnisses.

In der US-A-4 120 588 wird ein Ringinterferometer beschrieben, welches einen in mehreren Lagen auf einem Substrat aufgebrachten Wellenleiter besitzt. Dieser Wellenleiter wird von dem Lichtstrahl in nur einer Richtung durchlaufen. Nach dem Durchlaufen des Wellenleiters wird der Lichtstrahl, zusammen mit einem über einen Strahlteiler abgetrennten, von der gleichen Lichtquelle stammenden Referenzlicht, ausgewertet.

Der Wellenleiter dieses Ringinterferometers hat jedoch keinen Wicklungscharakter im Sinne der vorliegenden Lichtleitfaserwicklung.

## Vorteile der Erfindung

Die Lichtleitfaserwicklung für eine Einrichtung zur Messung der Drehgeschwindigkeit mit den kennzeichnenden Merkmalen des Anspruchs 1 hat demgegenüber den Vorteil, daß Störungen verschiedener Art (beispielsweise Temperatur, Schall,) immer beide Lichtleitfasern im gleichen Längenabstand zu der Einkoppeloptik, d. h., symmetrisch zu den Enden wirken. Damit können diese Störungen keinen Einfluß auf das Meßergebnis haben.

Zur weiteren Verbesserung der Störunempfindlichkeit wird in einer Weiterbildung der Erfindung vorgeschlagen, die Wicklung mit einer geraden Anzahl von Lagen zu versehen.

Vorteilhafte Verfahren zum Herstellen von Lichtleitfaserwicklungen zeigen die Ansprüche 3 und 4. Damit wird eine einfache Wickeltechnik, ohne zusätzliches Verbinden oder Auftrennen der Lichtleitfaser, möglich.

Die mechanische Stabilität der Wicklung kann weiterbildungsgemäß durch Klebemittelauftrag auf die einzelnen Lagen erreicht werden.

Weitere Vorteile der Erfindung ergeben sich aus der Beschreibung der Ausführungsbeispiele.

Figurenbeschreibung

Ausführungsbeispiele der Erfindung sind in der Zeichnung dargestellt und in der nachfolgenden Beschreibung näher erläutert.

Es zeigen :

Fig. 1 den Aufbau einer Einrichtung zur Messung der Drehgeschwindigkeit (Faserkreisel),

Fig. 2a/b den prinzipiellen Wicklungsaufbau

Fig. 3 den schematischen Aufbau einer Lichtleitfaserwicklung,

Fig. 4a/b ein Wickelverfahren zur Herstellung der Wicklung nach Fig. 2 und 3.

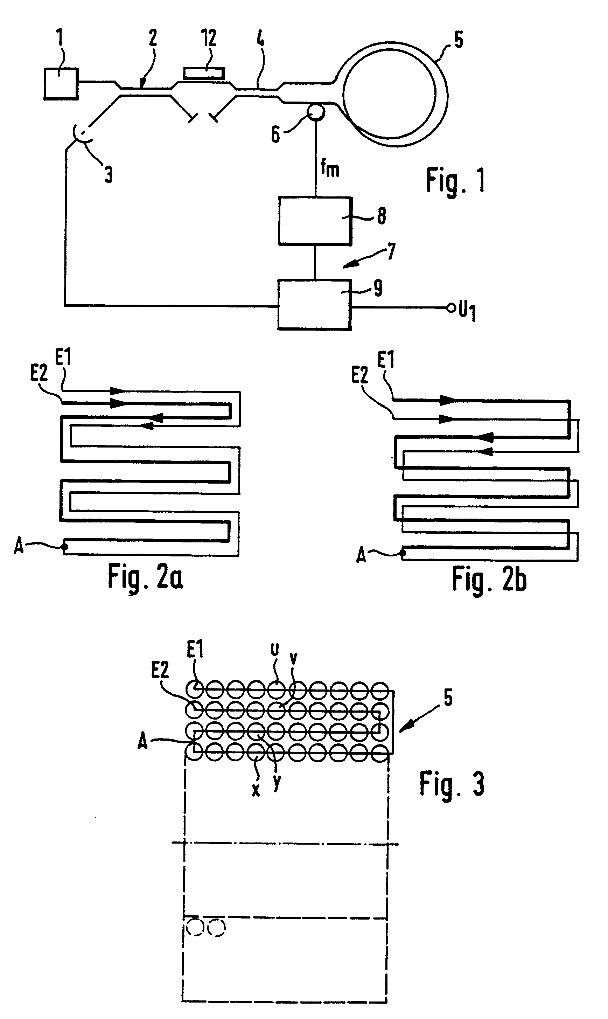

Der in Fig. 1 gezeigte Faserkreisel besteht aus einer Laserdiode 1, einem Strahlteiler 2 mit nachgeschalteter Fotodiode 3, einem Polarisator 12, einem Strahlteiler 4, einer spulenartig aufgebautei Lichtleitfaserwicklung 5, einem Modulator 6 und einer Auswerteeinrichtung 7. Die Auswerteeinrichtung 7 beinhaltet nach Fig. 1 einen Frequenzgenerator 8, dessen Signal dem Modulator 6 und einer phasenempfindlichen Gleichrichterschaltung 9 zugeführt wird.

Für den phasenempfindlichen Nachweis von Drehgeschwindigkeiten bzw. Drehraten ist es erforderlich, die Phasenlage der sich in der Lichtleitfaser 5 ausbreitenden Lichtwellen mittels des Modulators 6 zu modulieren. Beispielsweise besteht der Modulator 6 aus einem piezoelektrischen Körper, um den eine oder mehrere Windungen der Lichtleitfaser 5 gewickelt sind und der bei Ansteuerung mit dem Frequenzgenerator 8 die Länge der Lichtleitfaser 5 moduliert. Der phasenempfindlichen Gleichrichterschaltung 9 wird das von der Fotodiode 3 detektierte Signal und, als Referenzsignal, die von dem Generator 8 gebildete Frequenz $f_m$ zugeführt.

Nach phasenempfindlicher Gleichrichtung des Detektorsignals auf der Modulationsfrequenz $f_m$ steht das der Drehrate proportionale Ausgangssignal $U_1$ zur Verfügung.

Anhand der Fig. 2a wird die Lichtleitfaserwicklung näher beschrieben. Die beiden Enden E1, E2 sind hier die Übergangsstellen zum Strahlteiler 4 bzw. zum Modulator 6 in Fig.1. Die beiden überlagerten Lichtstrahlen laufen innerhalb benachbarter Lagen gesehen in Pfeilrichtung parallel miteinander (jedoch in den benachbarten Windungen mit entgegengesetztem Umlaufsinn) bis zum Anfang A der Lichtleitfaser, überschneiden sich dort und laufen in der jeweils benachbarten Lage wieder zurück. Anhand dieser Figur wird deutlich, daß die Lichtstrahlen zu jedem Zeitpunkt in benachbarten Windungen benachbarter Lagen verlaufen. Eine Störung beispielsweise durch Längenänderung eines Teils der Wicklung wirkt damit gleichzeitig auf beide Lichtstrahlen gleichmäßig und hat keine Verfälschung des Meßergebnisses zur Folge. Einen ähnlichen Aufbau mit den gleichen Vorteilen bezüglich der Störunempfindlichkeit zeigt Fig. 2b. Auch hier laufen die Lichtstrahlen parallel.

Fig. 3 zeigt den Aufbau der in Fig. 2a beschriebenen Lichtleitfaserwicklung 5 in einer Schnittdarstellung. Das Wicklungsschema ist wieder durch die ausgezogenen Linien innerhalb der Lichtleitfaserschnittflächen dargestellt. Allerdings sind nur 4 Wicklungslagen gezeigt, selbstverständlich ist das Wickelprinzip für eine beliebige Anzahl von Lagen geeignet. Aus dieser Figur wird deutlich, daß Lichtleitfaserstücke, die den gleichen Abstand zum Zentrum (Wicklungsanfang A) der gesamten Faserlänge haben, in der Wicklung unmittelbar benachbart sind. So sind z.B. die benachbarten Faserstücke x und y oder u und v gleich weit vom Zentrum entfernt und weitgehend gleichen Umwelteinflüssen ausgeliefert. Damit kompensieren sich die auf beide Faserstücke einwirkenden Störungen.

Dieser Aufbau ist am wirksamsten bei einer geraden Anzahl von Wicklungslagen.

Ein wesentlicher Vorteil dieser Wicklungsart ist auch die Benutzung einer Lichtleitfaser, die keine Trennstelle aufweist. Damit entfällt das aufwendige Verbinden der Faseranfänge und es treten keine Spleißverluste und keine Rückstreuungen auf.

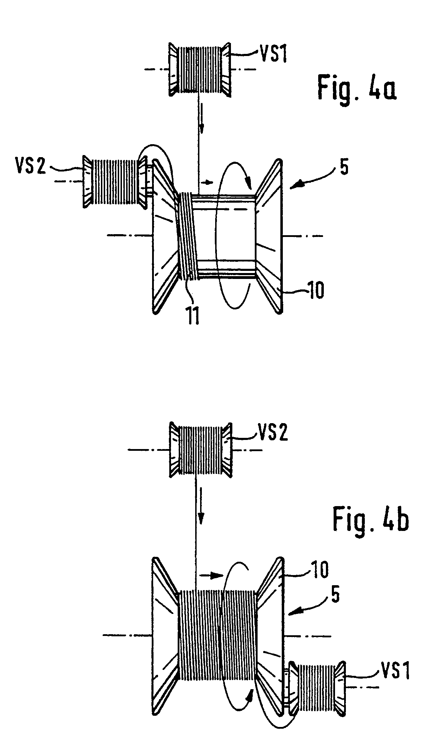

Das Verfahren zum Wickeln der Lichtleitfaserspule 5 ist in der Fig. 4a und b gezeigt. Wesentliches Merkmal dieser Wickeltechnik ist die Aufteilung der Lichtleitfaser auf zwei Vorratsspulen VS1 und VS2. Diese Aufteilung erfolgt vor dem eigentlichen Wickelvorgang derart, daß jede Vorratsspule die halbe Faserlänge enthält. Um eine Wicklung entsprechend Fig. 2a zu erhalten, wird wie folgt verfahren : Wie in Fig. 4a gezeigt, wird zu Beginn des Wickelns die Vorratsspule VS2 an dem sich drehenden Formteil 10 für die Wicklung befestigt und eine erste Windungslage 11 in diesem Beispiel von links aus von der Vorratsspule VS1 auf das Formteil 10 gewickelt. Danach wird die Vorratsspule VS1 an dem Formteil 10 an der rechten Seite befestigt (Fig. 4b) und mit der Vorratsspule VS2 ebenfalls von links nach rechts eine zweite Lage gewickelt. Anschließend wird eine hier nicht mehr dargestellte dritte Lage ebenfalls mit der Vorratsspule VS2 in die Gegenrichtung gewickelt, um nun wiederum diese Vorratsspule an dem Formteil 10 zu befestigen und von der Vorratsspule VS1 die vierte und fünfte Lage zu übertragen. Während dem Wickeln der einzelnen Lagen oder nach dem kompletten Erstellen der Lichtleitfaserwicklung wird durch Zufügen von Klebemittel eine selbsttragende Wicklung hergestellt.

## Ansprüche

1. Lichtleitfaserwicklung für eine Einrichtung zur Messung der Drehgeschwindigkeit, bei der zwei mittels eines Strahlteilers erzeugte Lichtstrahlen nach gegensinnigem Durchlaufen eines durch die mehrere Wicklungslagen aufweisende Lichtleitfaserwicklung gebildeten geschlossenen Lichtweges einander überlagert werden und bei der die durch den SagnacEffekt bedingte Phasenverschiebung ausgewertet wird, dadurch gekennzeichnet, daß die Wicklung (5) derart aufgebaut ist, daß, bezogen auf die Mitte (A) der Lichtleitfaserlänge, sich hinsichtlich des Abstandes zu dieser Mitte (A) entsprechende Punkte der beiden Lichtleitfaserhälften innerhalb der gesamten Lichtleitfaserwicklung (5) in benachbarten Wicklungslagen liegen.

2. Lichtleitfaserwicklung nach Anspruch 1, dadurch gekennzeichnet, daß die Wicklung aus einer geraden Anzahl von Lagen besteht.

3. Verfahren zur Herstellung einer Lichtleitfaserwicklung nach Anspruch 2, dadurch gekennzeichnet, daß

a) die gesamte Lichtleitfaser gleichmäßig verteilt auf zwei Vorratsspulen (VS 1, VS 2) angeordnet ist,

b) von der Mitte der Lichtleitfaser ausgehend von der einen Lagenbegrenzung zur gegenüberliegenden Lagenbegrenzung eine erste Lage von der ersten Vorratsspule (VS 1) gewickelt wird,

c) von der Mitte Lichtleitfaser ausgehend von der einen Lagenbegrenzung zur gegenüberliegenden Lagenbegrenzung eine zweite Lage von der zweiten Vorratsspule (VS 2) gewickelt wird,

d) die dritte Lage von der zweiten Vorratsspule (VS 2) gewickelt wird,

e) die vierte und fünfte Lage von der ersten Vorratsspule (VS 1) gewickelt werden,

f) die sechste Lage von der zweiten Vorratsspule (VS 2) gewickelt wird, und

g) nach diesem Wickelschema weiter verfahren wird, bis eine Wicklung aus der gesamten Lichtleitfaserlänge gebildet ist und sich eine gerade Anzahl von Lagen auf der Wicklung befindet.

4. Verfahren zur Herstellung einer Lichtleitfaserwicklung nach Anspruch 2, dadurch gekennzeichnet, daß

a) die gesamte Lichtleitfaser gleichmäßig verteilt auf zwei Vorratsspulen (VS 1, VS 2) angeordnet ist,

b) von der Mitte der Lichtleitfaser ausgehend von der einen Lagenbegrenzung zur gegenüberliegenden Lagenbegrenzung eine erste Lage von der ersten Vorratsspule (VS 1) gewickelt wird,

c) von der Mitte der Lichtleitfaser ausgehend von der einen Lagenbegrenzung zur gegenüberliegenden Lagenbegrenzung eine zweite Lage von der zweiten Vorratsspule (VS 2) gewickelt wird,

d) die dritte Lage von der ersten Vorratsspule (VS 1) gewickelt wird,

e) die vierte Lage von der zweiten Vorratsspule (VS 2) gewickelt wird, und

f) nach diesem Wickelschema weiter verfahren wird, bis eine Wicklung aus der gesamten Lichtleitfaserlänge gebildet ist und sich eine gerade Anzahl von Lagen auf der Wicklung befindet.

5. Verfahren nach Anspruch 3 und 4, dadurch gekennzeichnet, daß jede Lage mit einem Klebemittel fixiert wird.

## Claims

1. An optical conductor fibre winding for a device for measuring the rotational speed, in which two beams of light produced with the aid of a beam splitter are superimposed on each other after passing through a continuous light path in opposite directions, said light path being formed by the optical conductor fibre winding which has a plurality of winding layers and in which the phase shift caused by the Sagnac effect is evaluated, characterised in that the winding (5) is so constructed that, in relation to the centre (A) of the optical conductor fibre length, points of the two optical conductor halves which correspond in respect of the separation from this centre (A) lie within the entire optical conductor fibre winding (5) in adjacent winding layers.

2. An optical conductor fibre winding according to claim 1 characterised in that the winding consists of an even number of layers.

3. A method of manufacturing an optical conductor fibre winding according to claim 2, characterised in that

a) the entire optical conductor fibre is evenly distributed on two supply coils (VS 1, VS 2)

b) starting from the centre of the optical conductor fibre, a first layer is wound on from the first supply coil (VS 1) from one layer limit to the opposite layer limit

c) starting from the centre of the optical conductor fibre, a second layer is wound on from the second supply coil (VS 2) from one layer limit to the opposite layer limit

d) the third layer is wound on from the second supply coil (VS 2)

e) the fourth and fifth layers are wound on from the first supply coil (VS 1)

f) the sixth layer is wound on from the second supply coil (VS 2) and

g) this winding pattern is continued until a winding is formed from the entire length of the optical conductor fibre and an even number of layers is located on the winding.

4. A method of manufacturing an optical conductor fibre winding according to claim 2, characterised in that

a) the entire optical conductor fibre is evenly distributed on two supply coils (VS 1, VS 2,),

b) starting from the centre of the optical conductor fibre a first layer is wound on from the first supply coil (VS 1) from one layer limit to the opposite layer limit

c) starting from the centre of the optical conductor fibre a second layer is wound on from the second supply coil (VS 2) from one layer limit to the opposite layer limit

d) the third layer is wound on from the first supply coil (VS 1)

e) the fourth layer is wound on from the second supply coil (VS 2) and

f) this winding pattern is continued until a winding is formed from entire length of optical conductor fibre and an even number of layers is located on the winding.

5. A method according to claim 3 and 4, characterised in that each layer is fixed with an adhesive.

## Revendications

1. Enroulement de fibre conductrice de lumière, destiné à un dispositif pour mesurer la vitesse de rotation, dans lequel deux faisceaux lumineux, produits au moyen d'un séparateur de faisceau, sont superposés après avoir parcouru, en sens contraire, un trajet optique fermé, formé par l'enroulement de fibre conductrice de lumière et présentant plusieurs couches d'enroulement, et dans lequel est exploité le déphasage provoqué par l'effet de Sagnac, caractérisé en ce que l'enroulement (5) est réalisé de manière que, par rapport au milieu (A) de la longueur de la fibre conductrice de lumière, des points correspondants des deux moitiés de la fibre, quant à la distance de ce milieu (A), se trouvent dans des couches voisines de l'ensemble de l'enroulement de fibre conductrice de lumière (5).

2. Enroulement de fibre conductrice de lumière selon la revendication 1, caractérisé en ce qu'il est constitué d'un nombre pair de couches.

3. Procédé pour réaliser un enroulement de fibre conductrice de lumière selon la revendication 2, caractérisé en ce que

a) on répartit toute la fibre conductrice de lumière de manière uniforme sur deux bobines d'alimentation (VS 1, VS 2),

b) partant du milieu de la fibre conductrice de lumière, on bobine une première couche à partir de la première bobine d'alimentation (VS 1) depuis une limite de couche à la limite de couche opposée,

c) partant du milieu de la fibre conductrice de lumière, on bobine une deuxième couche, à partir de la deuxième bobine d'alimentation (VS 2), depuis une limite de couche à la limite de couche opposée,

d) on bobine la troisième couche à partir de la deuxième bobine d'alimentation (VS 2),

e) on bobine les quatrième et cinquième couches à partir de la première bobine d'alimentation (VS 1),

4

f) on bobine la sixième couche à partir de la deuxième bobine d'alimentation (VS 2) et

g) on continue selon ce schéma de bobinage jusqu'à ce qu'un enroulement soit formé de toute la longueur de la fibre conductrice de lumière et que l'enroulement porte un nombre pair de couches.

4. Procédé pour réaliser un enroulement de fibre conductrice de lumière selon la revendication 2 caractérisé en ce que

a) on répartit toute la fibre conductrice de lumière de manière uniforme sur deux bobines d'alimentation (VS 1 VS 2),

b) partant du milieu de la fibre conductrice de lumière on bobine une première couche à partir de la première bobine d'alimentation (VS 1) depuis une limite de couche à la limite de couche opposée,

c) partant du milieu de la fibre conductrice de lumière on bobine une deuxième couche, à partir de la deuxième bobine d'alimentation (VS 2) depuis une limite de couche à la limite de couche opposée,

d) on bobine la troisième couche à partir de la première bobine d'alimentation (VS 1),

e) on bobine la quatrième couche à partir de la deuxième bobine d'alimentation (VS 2) et,

f) on continue selon ce schéma de bobinage jusqu'à ce qu'un enroulement soit formé de toute la longueur de la fibre conductrice de lumière et que l'enroulement porte un nombre pair de couches

5. Procédé selon les revendications 3 et 4, caractérisé en ce que l'on fixe chaque couche à l'aide d'une colle.

Fig. 1

fm

U₁

Fig. 2a

Fig. 2b

E1

E2

A

U

V

X

Y

5

Fig. 3

VS1

Fig. 4a

VS2

5

10

11

VS2

Fig. 4b

10

5

VS1